# EUROPEAN PATENT SPECIFICATION

(11) **EP 1 674 525 B1**
(45) Date of publication and mention of the grant of the patent: **04.03.2009**
(21) Application number: 05257894.5
(22) Date of filing: 21.12.2005
(51) Int. Cl.: C08L 53/02, C08L 23/10

(54) **Thermoplastic elastomer and molded product produced from the same**
Thermoplastische Elastomerzusammensetzung und daraus geformte Gegenstände
Composition a base d'élastomère thermoplastique et article moulé

(30) Priority: 24.12.2004 JP 2004373205; 05.12.2005 JP 2005350511
(43) Date of publication of application: 28.06.2006
(73) Proprietor: Mitsubishi Chemical Corporation, Minato-ku Tokyo 108-0014 (JP); Shin-Etsu Chemical Co., Ltd., Tokyo (JP)
(72) Inventor: Mori, Hiroyuki Advanced Plastics Compounds Company, Nagoya-shi Aichi-ken (JP); Azami, E., Advanced Plastics Compounds Company, Nagoya-shi Aichi-ken (JP); Minemura, Masahiko, Shin-Etsu Chemical Co. Ltd., Usui-gun Gunma-ken (JP); Tanaka, Masaki, Shin Etsu Chemical Co., Ltd., Tokyo (JP)
(74) Representative: Woods, Geoffrey Corlett

(56) References cited:
- EP-A- 1 498 454
- DATABASE WPI Section Ch, Week 200325 Derwent Publications Ltd., London, GB; Class A18, AN 2003-251527 XP002369859 & JP 2002 348434 A (JAPAN POLYOLEFINS CO LTD) 4 December 2002 (2002-12-04)

## Description

### FIELD OF THE INVENTION

The present invention relates to a thermoplastic elastomer and a molded product produced from the thermoplastic elastomer, and more particularly, to a thermoplastic elastomer which is excellent in not only injection-moldability, but also scratch resistance, abrasion resistance and touch feel, and a molded product produced from the thermoplastic elastomer.

### BACKGROUND OF THE INVENTION

Thermoplastic elastomers have been used in various applications such as automobiles, packings for building materials, interior and exterior trim materials, building parts, sundries, etc., because of excellent rubber elasticity, coloring property and designing property as well as excellent moldability by various methods such as injection-molding, extrusion-molding, blow-molding, sheet-molding and vacuum-forming similarly to ordinary thermoplastic resins, and applications of the thermoplastic elastomers have been rapidly expanded. In particular, olefin-based thermoplastic elastomers (TPO) and styrene-based thermoplastic elastomers (TPS) have been recently used in many applications because of light weight, easy-recyclability and a high cost performance thereof. On the other hand, although TPO and TPS are also recently applied to grips in view of their good flexibility giving a soft touch feel when grasped by hands, such grips made of TPO or TPS tend to readily suffer from scratches or flaws merely by lightly rubbing the surface of the molded grips, and further have a poor abrasion resistance. For example, when being repeatedly rubbed with cloth gloves, the surface of the grips is readily rubbed off, so that designed patterns formed thereon are eliminated. Further, the grips made of TPO or TPS has not a dry touch feel bur sticky touch feel when directly grasped with naked hands, resulting in strange touch feel unsuitable as grips. For these reasons, it has been strongly demanded to provide materials capable of not only exhibiting excellent scratch resistance and abrasion resistance but also having a dry touch feel when grasped with hands. EP 1498454 discloses a thermoplastic elastomer comprising: (a) a block copolymer comprising blocks of a vinyl aromatic hydrocarbon polymer and an elastomeric polymer; (b) a softening agent for hydrocarbon-based rubbers; and (c) an olefin-based resin.

In recent years, as thermoplastic elastomers which exhibit excellent moldability such as injection-moldability and provide molded products having excellent flexibility, touch feel and abrasion resistance, there have been proposed thermoplastic elastomer compositions comprising (a) a hydrogenated derivative of a block copolymer (x) represented by the general formula: A-B-A wherein A represents a polymer block derived from a monovinyl-substituted aromatic hydrocarbon and B represents an elastomeric polymer block derived from a conjugated diene, (b) a polypropylene-based resin and (c) a mineral oil-based softening agent for rubbers, in which the components (b) and (c) are contained in a predetermined amount based on the component (a), and also containing (d) an acryl-modified organopolysiloxane in a predetermined amount based on a total amount of the components (a), (b) and (c) (for example, refer to Japanese Patent Application Laid-Open (KOKAI) No. 2002-348434).

However, according to the evaluation performed by the present inventors, the above thermoplastic elastomer compositions are still insufficient in their properties, although an abrasion resistance thereof is improved by inclusion of the acryl-modified organopolysiloxane to a certain extent.

### SUMMARY OF THE INVENTION

The present invention has been made to solve the above conventional problems. An object of the present invention is to provide a thermoplastic elastomer which is excellent in not only flexibility and abrasion resistance, but also dry touch feel.

As a result of the present inventors' earnest study, it has been found that when the above proposed thermoplastic elastomer compositions are blended with a modified organopolysiloxane and the obtained mixture is dynamically heat-treated in the presence of an organic peroxide, the resultant thermoplastic elastomer is excellent in not only flexibility and abrasion resistance, but also dry touch feel. Further, it has been found that the abrasion resistance and touch feel of such a thermoplastic elastomer has an interrelation with a strength thereof as measured by X-ray fluorescence analysis, and in the case where a strength (S1) of a silicon element in a surface portion of the thermoplastic elastomer after immersing the thermoplastic elastomer in a tetrahydrofuran (THF) solution at an ordinary temperature for 10 minutes as measured by a X-ray fluorescence analysis is higher by 2 (kcps) or more, than a strength (S2) of a silicon element in a surface portion of the non-immersed thermoplastic elastomer as measured by a X-ray fluorescence analysis, the thermoplastic elastomer is excellent in abrasion resistance and touch feel.

The present invention has been attained on the basis of the above findings. To accomplish the aims, in a first aspect of the present invention, there is provided a thermoplastic elastomer comprising:
(a) a hydrogenated block copolymer having a weight-average molecular weight of 80,000 to 1,000,000, which is produced by hydrogenating a (A)-(B) type block copolymer and/or a (A)-(B)-(A) type block copolymer wherein (A) represents a vinyl aromatic compound block and (B) represents a conjugated diene polymer block, such that at least 90% of double bonds of a conjugated diene moiety of the block copolymers are saturated;
(b) an olefin-based crystalline resin;
(c) a hydrocarbon-based softening agent for rubbers; and
(d) an acryl-modified organopolysiloxane,
wherein a weight ratio of the component (a) to the component (b) ((a)/(b)) is 15:85 to 85:15; the component (c) is contained in an amount of 10 to 300 parts by weight based on 100 parts by weight of the component (a); the component (d) is contained in an amount of 0.1 to 10 parts by weight based on 100 parts by weight of a total amount of the components (a) to (c); and at least the components (a) and (d) are dynamically heat-treated in the presence of an organic peroxide.

In a second aspect of the present invention, there is provided a thermoplastic elastomer molded product obtainable by injection-molding the above thermoplastic elastomer.

### EFFECTS OF THE INVENTION

Thus, in accordance with the present invention, there is provided a thermoplastic elastomer which maintains good properties inherent thereto such as flexibility or the like, exhibits a less stickiness as well as an excellent dry touch feel and an excellent abrasion resistance, and is free from elimination of designed embosses or textures even when grasped with hands. The thermoplastic elastomer of the present invention is suitably used as materials for products to be grasped by hands (grips) which are required to have good flexibility and touch feel.

### DETAILED DESCRIPTION OF THE INVENTION

The present invention is described in detail below. The thermoplastic elastomer of the present invention contains as essential components, (a) a specific block copolymer, (b) an olefin-based crystalline resin, (c) a hydrocarbon-based softening agent for rubbers, and (d) an acryl-modified organopolysiloxane. In the preferred embodiments of the present invention, the thermoplastic elastomer further contains (e) a specific unmodified organopolysiloxane, (f) a bamboo powder, (g) a low-density polyethylene resin and/or a linear low-density polyethylene resin, (h) a high-density polyethylene resin, (i) a specific multi-phase structure-type modified olefin compound, and (j) a permanent antistatic agent.

First, the above respective components (a) to (h) constituting the thermoplastic elastomer of the present invention are explained.

### <Component (a): hydrogenated block copolymer>

In the present invention, as the component (a), there is used the hydrogenated block copolymer having a weight-average molecular weight of 80,000 to 1,000,000, which is produced by hydrogenating a (A)-(B) type block copolymer and/or a (A)-(B)-(A) type block copolymer (wherein (A) represents a vinyl aromatic compound block and (B) represents a conjugated diene polymer block), such that at least 90% of double bonds of a conjugated diene moiety of the block copolymers are saturated.

Examples of the vinyl aromatic hydrocarbon constituting the vinyl aromatic compound block (A) may include styrene, t-butyl styrene, α-methyl styrene, o-, m- or p-methyl styrene, 1,3-dimethyl styrene, vinyl naphthalene and vinyl anthracene. Of these vinyl aromatic hydrocarbons, especially preferred are styrene and/or α-methyl styrene.

Examples of the diene constituting the conjugated diene copolymer block (B) may include butadiene, isoprene, 1,3-pentadiene, 2,3-dimethyl-1,3-butadiene, 2-methyl-1,3-pentadiene, 1,3-hexadiene, 4,5-diethyl-1,3-octadiene and 3-butyl-1,3-octadiene. Of these dienes, especially preferred are butadiene and/or isoprene. When a mixture of butadiene and isoprene is used, a mixing ratio (weight ratio) of butadiene to isoprene is usually 2:8 to 6:4.

In the case where only butadiene is used as the conjugated diene monomer, the hydrogenated block copolymer is preferably such a block copolymer in which the content of a 1,2-addition structure in a microstructure of the polybutadiene block is usually 20 to 80%, preferably 30 to 60% based on the whole addition structure thereof. The molecular structure of the block copolymer may be a linear structure, a branched structure, a radial structure or a combination of these structures.

The hydrogenated block copolymer has a weight-average molecular weight of 80,000 to 1,000,000, preferably 100,000 to 600,000, more preferably 150,000 to 400,000 calculated as a molecular weight of polystyrene as measured by gel permeation chromatography. When the weight-average molecular weight of the hydrogenated block copolymer is less than 80,000, the resultant thermoplastic elastomer tends to be deteriorated in rubber elasticity and mechanical strength, and tends to suffer from bleeding-out of the below-mentioned hydrocarbon-based softening agent for rubbers. On the other hand, when the weight-average molecular weight of the hydrogenated block copolymer exceeds 1,000,000, the resultant thermoplastic elastomer tends to be deteriorated in fluidity and, therefore, moldability.

The above hydrogenated block copolymer may be produced by any suitable method as long as the copolymer having the above structure and physical properties is produced thereby. Examples of such a production method may include the method as described in Japanese Patent Publication (KOKOKU) No. 40-23798(1965), namely there may be used a method of conducting block polymerization in an inert solvent in the presence of a lithium catalyst. On the other hand, the hydrogenation treatment for production of the hydrogenated block copolymer may be conducted in an inert solvent in the presence of a hydrogenation catalyst by the methods described, for example, in Japanese Patent Publication (KOKOKU) Nos. 42-8704(1967) and 43-6636(1968) and Japanese Patent Application Laid-open (KOKAI) Nos. 59-133203(1984) and 60-79005(1985).

Meanwhile, the hydrogenated block copolymer may be in the form of a block copolymer whose polymer molecular chain is extended or branched through a residue of a coupling agent. Examples of the coupling agent usable may include diethyl adipate, divinyl benzene, tetrachlorosilicon, butyl trichlorosilicon, tetrachlorotin, butyl trichlorotin, 1,2-dibromoethane, 1,4-chloromethyl benzene, bis(trichlorosilyl)ethane, epoxidated linseed oil, tolylene diisocyanate, 1,2,4-benzene triisocyanate, etc.

The content of the vinyl aromatic compound block in the hydrogenated block copolymer is usually 10 to 90% by weight, preferably 15 to 80% by weight. When the content of the vinyl aromatic compound block is less than 10% by weight, the resultant thermoplastic elastomer tends to be deteriorated in mechanical properties such as tensile strength, or heat resistance. On the other hand, when the content of the vinyl aromatic compound block is more than 90% by weight, the resultant thermoplastic elastomer tends to be deteriorated in flexibility and rubber elasticity, and further tends to suffer from bleeding-out of the below-mentioned hydrocarbon-based softening agent for rubbers.

Examples of commercially available products of the above hydrogenated block copolymer may include "KRATON-G" produced by Kraton Polymer Co., Ltd., "SEPTON" produced by Kuraray Co., Ltd., and "TOUGHTEC" produced by Asahi Kasei Chemicals Co., Ltd.

### <Component (b): olefin-based crystalline resin>

In the present invention, as the component (b), there is used the olefin-based crystalline resin. Specific examples of the olefin-based crystalline resin may include ethylene homopolymers, copolymers of ethylene with α-olefin or a vinyl monomer such as vinyl acetate and ethylene acrylate, propylene homopolymers, block copolymers of propylene with α-olefin, random copolymers of propylene with α-olefin, 1-butene homopolymers, random copolymers of 1-butene with α-olefin, 4-methyl-1-pentene homopolymers and random copolymers of 4-methyl-1-pentene with α-olefin. Examples of the other α-olefin usable as a comonomer of the component (b) may include ethylene, 1-butene, 4-methyl-1-pentene, 1-hexene and 1-octene. These components (b) may be used in combination of any two or more thereof.

Of these olefin-based crystalline resins, preferred are polypropylene-based crystalline resins such as propylene homopolymers, block copolymers of propylene with α-olefin and random copolymers of propylene with α-olefin, and more preferred are random copolymers of propylene with α-olefin.

The above olefin-based crystalline resin has a melt flow rate of usually 0.01 to 100 g/10 min, preferably 0.1 to 70 g/10 min as measured at 230°C under a load of 2.16 kg according to JIS-K7210. When the melt flow rate of the olefin-based crystalline resin is less than the above-specified range, the resultant thermoplastic elastomer tends to be deteriorated in fluidity and, therefore, moldability. When the melt flow rate of the olefin-based crystalline resin is more than the above-specified range, the resultant thermoplastic elastomer tends to be deteriorated in mechanical properties such as tensile strength. Meanwhile, these olefin-based crystalline resins may be used in combination of any two or more thereof.

### <Component (c): hydrocarbon-based softening agent for rubbers>

In the present invention, as the component (c), there is used the hydrocarbon-based softening agent for rubbers. As the hydrocarbon-based softening agent for rubbers, there may be suitably used hydrocarbons having a weight-average molecular weight of usually 300 to 2,000, preferably 500 to 1,500. The suitable softening agents are mineral oil-based hydrocarbons and synthetic resin-based hydrocarbons.

In general, the mineral oil-based softening agent for rubbers is in the form of a mixture composed of an aromatic hydrocarbon, a naphthene-based hydrocarbon and a paraffin-based hydrocarbon. Hydrocarbon oils in which a content of carbon derived from aromatic hydrocarbons is not less than 35% by weight, are called "aromatic-based oils"; hydrocarbon oils in which a content of carbon derived from naphthene-based hydrocarbons is 30 to 45% by weight, are called "naphthene-based oils"; and hydrocarbon oils in which a content of carbon derived from paraffin-based hydrocarbons is not less than 50% by weight, are called "paraffin-based oils". In the present invention, of these oils, the paraffin-based oils are preferably used. Examples of commercially available products of the paraffin-based oils may include "DYNAPROCESS OIL PW-380" produced by Idemitsu Kosan Co., Ltd., etc.

### <Component (d): acryl-modified organopolysiloxane>

In the present invention, as the component (d), there is used the acryl-modified organopolysiloxane. The organopolysiloxane (d1) as a base polymer of the acryl-modified organopolysiloxane is represented by the following general formula: 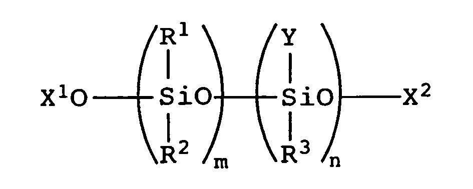 wherein R¹, R² and R³ are each independently a substituted or unsubstituted hydrocarbon group having 1 to 20 carbon atoms; Y is a radical reactive group or an organic group containing -SH group; X¹ and X² are each independently a hydrogen atom, a lower alkyl group or -SiR⁴R⁵R⁶ wherein R⁴, R⁵ and R⁶ are each independently a substituted or unsubstituted hydrocarbon group having 1 to 20 carbon atoms, a radical reactive group or an organic group containing -SH group; m is an integer of not more than 10,000; n is an integer of not less than 1; and a siloxane chain of the organopolysiloxane may have a branched chain.

Specific examples of the hydrocarbon group as R¹, R² and R³ may include alkyl groups such as methyl, ethyl, isopropyl, n-propyl, isobutyl and n-butyl, and aryl groups such as phenyl, tolyl, xylyl and naphthyl. Typical examples of the substituent group bonded to the above hydrocarbon groups may include halogen atoms.

Specific examples of the radical reactive group as Y may include vinyl, allyl, γ-acryloxypropyl and γ-methacryloxypropyl. Specific examples of the organic group containing -SH group as Y may include γ-mercaptopropyl.

The lower alkyl group represented by X¹ and X² is preferably an alkyl group having 1 to 4 carbon atoms. Specific examples of the lower alkyl group as X¹ and X² may include methyl, ethyl, isopropyl, n-propyl, isobutyl and n-butyl. Specific examples of the substituted or unsubstituted hydrocarbon group, the radical reactive group or the organic group containing -SH group as R⁴, R⁵ and R⁶ may include the same groups as exemplified above.

The above integer m is preferably 500 to 8000, and the above integer n is preferably 1 to 500. When the integer m is 2 or more, a plurality of R¹ and R² groups in the m polymer units may be respectively the same or different, and when the integer n is 2 or more, a plurality of R³ and Y groups in the n polymer units may be respectively the same or different. In addition, the organopolysiloxane (d1) represented by the above general formula may contain a slight amount of branched chains therein.

The organopolysiloxane (d1) represented by the above general formula may be produced by subjecting a chain-like or cyclic low-molecular weight organopolysiloxane or an alkoxysilane which contains the above-specified group to hydrolysis reaction, polymerization reaction or equilibrium reaction. Further, the branched organopolysiloxane may be produced by using a small amount of trialkoxysilane or tetraalkoxysilane as a raw material upon polymerization of the above raw materials.

The above hydrolysis reaction, polymerization reaction or equilibrium reaction of the low-molecular weight organopolysiloxane or the alkoxysilane may be conducted in a water-emulsified state by known methods. For example, there may be performed such a method in which a mixed solution of the organopolysiloxane or alkoxysilane containing the above-specified group is treated in the presence of a sulfonic acid such as alkylbenzenesulfonic acid and alkylsulfonic acid using a homogenizer, etc., and the organopolysiloxane or alkoxysilane containing the above-specified group is polymerized while intimately mixing with water, thereby obtaining fine particles of the organopolysiloxane (d1) (in the from of emulsion).

The acryl-modified organopolysiloxane (d) is preferably a graft copolymer obtained by grafting a (meth)acrylic ester (d2) or a mixture containing not less than 70% by weight of the (meth)acrylic ester (d2) and not more than 30% by weight of the other monomer (d3) copolymerizable with the component (d2) to the above organopolysiloxane (d1) at a weight ratio of 5:95 to 95:5: Meanwhile, the above weight ratio means a ratio of (d1)/(d2) or (d1)/[(d2) + (d3)].

Examples of the above (meth)acrylic ester (d2) may include alkyl esters of acrylic acid or methacrylic acid, hydroxyalkyl esters of acrylic acid or methacrylic acid, alkoxyalkyl esters of acrylic acid or methacrylic acid or the like. Specific examples of the (meth)acrylic ester (d2) may include acrylic esters such as methyl acrylate, ethyl acrylate, isopropyl acrylate, n-propyl acrylate, n-butyl acrylate, isobutyl acrylate, 2-ethylhexyl acrylate, isooctyl acrylate, n-octyl acrylate, 2-hydroxyethyl acrylate and 2-methoxyethyl acrylate; and methacrylic esters such as methyl methacrylate, ethyl methacrylate, isopropyl methacrylate, n-propyl methacrylate, n-butyl methacrylate, isobutyl methacrylate, n-hexyl methacrylate, 2-ethylhexyl methacrylate, n-lauryl methacrylate, 2-hydroxyethyl methacrylate and 2-ethoxyethyl methacrylate. These (meth)acrylic esters may be used in combination of any two or more thereof. Of these (meth)acrylic esters, preferred are those containing at least methyl methacrylate as one component.

Examples of the other monomer (d3) copolymerizable with the above (meth)acrylic ester (d2) may include monomers having one double bond, e.g., styrene-based compounds such as styrene, vinyl toluene and α-methyl styrene, unsaturated nitriles such as acrylonitrile and methacrylonitrile, halogenated olefins such as vinyl chloride and vinylidene chloride, vinyl esters such as vinyl acetate and vinyl propionate, unsaturated amides such as acrylamide, methacrylamide and N-methylol acrylamide, and unsaturated carboxylic acids such as acrylic acid, methacrylic acid and maleic anhydride, as well as polyunsaturated monomers such as ethyleneglycol dimethacrylate, propyleneglycol dimethacrylate, 1,4-butanediol dimethacrylate, allyl methacrylate, triallyl cyanurate and triallyl isocyanurate. These other copolymerizable monomers (d3) may be used in combination of any two or more thereof.

Examples of a radical initiator used in the above graft copolymerization may include those ordinarily used for emulsion polymerization such as persulfates and organic peroxides. The weight ratio of the organopolysiloxane (d1) to the (meth)acrylic ester (d2) or the mixture containing the (meth)acrylic ester (d2) and the other monomer (d3) copolymerizable with the (meth)acrylic ester (d2) is preferably 40:60 to 80:20. After completion of the polymerization, the reaction mixture may be subjected to salting-out or solidification, thereby separating and recovering the acryl-modified organopolysiloxane (d).

Examples of commercially available products of the acryl-modified organopolysiloxane may include "SHALINE" produced by Nissin Chemical Industry Co., Ltd, as described in the above Japanese Patent Application Laid-Open (KOKAI) No. 2002-348434.

### <Component (e): unmodified organopolysiloxane>

In the present invention, as the component (e), there is used the unmodified organopolysiloxane having a viscosity of not less than 10000 mm²/s as measured at 25°C according to JIS K2283. Specific examples of the unmodified organopolysiloxane may include dimethyl polysiloxane, methylphenyl polysiloxane, fluoroalkyl polysiloxane, dimethyldiphenyl polysiloxane and methylhydrogen polysiloxane. Of these unmodified organopolysiloxanes, preferred is dimethyl polysiloxane. The viscosity of the unmodified organopolysiloxane is preferably 500,000 to 30,000,000 mm²/s, more preferably 1,000,000 to 20,000,000 mm²/s. Such a high viscosity of the unmodified organopolysiloxane cannot be measured by a kinematic viscosity measuring method prescribed in JIS K 2283 and, therefore, may be determined by dividing a viscosity thereof measured using a rotational viscometer prescribed in JIS K7117 by a specific gravity thereof.

### <Component (f): bamboo powder>

Examples of bamboo powders usable in the present invention may include thick-stemmed bamboo (Phyllostachys pubescens), long-joined bamboo, china bamboo and black bamboo.

### <Component (g): Low-density polyethylene resin and linear low-density polyethylene resin>

The low-density polyethylene (LDPE) is an ethylene homopolymer having a density of 0.915 to 0.935 g/cm³, which may be generally produced by subjecting ethylene to highpressure radical polymerization at a temperature of 200 to 300°C under a pressure of 1,000 to 2,000 atm by a tubular method or an autoclave method. Also, the low-density polyethylene may be in the form of a copolymer of ethylene with a small amount of vinyl acetate, ethylene acrylate, etc.

The linear low-density polyethylene (LLDPE) is a copolymer of ethylene as a main component with α-olefin, which has a density of 0.910 to 0.945 g/cm³, and may be produced under a medium or high pressure condition in the presence of various catalysts such as Ziegler-based catalysts, chromium-based catalysts and metallocene catalysts by various polymerization methods such as a vapor-phase method, a solution method and a suspension polymerization method. Examples of the α-olefin to be copolymerized with ethylene may include α-olefins having 3 to 13 carbon atoms such as propylene, buten-1, penten-1, octen-1, 4-methyl penten-1, 4-methyl hexen-1, 4,4-dimethyl penten-1, nonen-1, decen-1, undecen-1 and dodecen-1.

The melt flow rate of the low-density polyethylene (LDPE) and the linear low-density polyethylene (LLDPE) is usually 0.05 to 50 g/10 min, preferably 0.1 to 20 g/10 min as measured at 190°C under a load of 2.16 kgf according to JIS K7210.

Specific examples of commercially available products of the above LLDPE may include "UNIPOLE" produced by UCC Corp., "DOWLEX" produced by Dow Chemical Co., Ltd., "SQURARE" produced by DuPont Canada, Co., Ltd., "MARLEX" produced by Philips Corp., "NEOZEX" and "ULTZEX" both produced by Mitsui Petrochemical Co., Ltd., "NISSEKI LINILEX" produced by Nippon Petrochemical Co., Ltd., and "STAMYLEX" produced by DSM Co., Ltd.

### <Component (h): high-density polyethylene resin>

The high-density polyethylene (HDPE) is a polyethylene resin made of an ethylene homopolymer or an ethylene-α-olefin copolymer which may be generally produced in the presence of Ziegler catalysts, Philips catalysts, metallocene catalysts, etc., by a polymerization method such as a slurry method, a solution method and a vapor-phase method. Specific examples of the α-olefin contained in the ethylene-α-olefin copolymer may include α-olefins having 3 to 20 carbon atoms such as propylene, 1-butene, 1-pentene, 1-hexene, 4-methyl-1-pentene, 1-octene, 1-decene, 1-tetradecene and 1-octadecene. The melt flow rate of the high-density polyethylene resin is usually 0.01 to 50 g/10 min, preferably 0.02 to 20 g/10 min as measured at 190°C under a load of 2.16 kgf according to JIS K7210. When the melt flow rate of the high-density polyethylene resin is too high, the resultant thermoplastic elastomer tends to suffer from sink marks upon molding. The density of the high-density polyethylene resin is usually 0.930 to 0.970 g/cm³, preferably 0.940 to 0.965 g/cm³.

### <Component (i): specific multi-phase structure-type modified olefin compound>

In the present invention, as the component (i), there is used the multi-phase structure-type modified olefin compound containing a vinyl-based polymer segment produced from at least one vinyl monomer selected from the group consisting of (meth)acrylic acid, a (meth)acrylic alkyl ester and a vinyl monomer containing a (meth)acrylic glycidyl group, and an olefin-based polymer segment, wherein the vinyl-based polymer segment is dispersed in the olefin-based polymer segment in the form of fine particles having a particle size of 0.01 to 10 µm.

Examples of the (meth)acrylic alkyl ester constituting the vinyl-based polymer segment may include acrylic esters produced from acrylic acid and an alkyl alcohol having 1 to 20 carbon atoms, for example, methyl acrylate, ethyl acrylate, etc., and methacrylic esters produced from methacrylic acid and an alkyl alcohol having 1 to 20 carbon atoms, for example, methyl methacrylate, ethyl methacrylate, etc. Examples of the hydroxyl-containing vinyl monomer may include 3-hydroxy-1-propane, 4-hydroxy-1-butene, cis-1,4-dihydroxy-2-butene, 2-hydroxyethyl methacrylate, 2-hydroxypropyl acrylate, 3-hydroxypropyl methacrylate and 2-hydroxyethyl crotonic acid.

The vinyl monomer constituting the vinyl-based polymer segment preferably contains, in addition to the above polar monomer, a non-polar or weak-polar vinyl monomer. Examples of such a non-polar or weak-polar vinyl monomer may include vinyl aromatic monomers such as styrene, methyl styrene, dimethyl styrene, ethyl styrene and isopropyl styrene; α-substituted styrenes such as α-methyl styrene and α-ethyl styrene; cyanided vinyl compounds such as acrylonitrile and methacrylonitrile.

The olefin-based polymer segment is a segment derived from an olefin-based polymer, i.e., an olefin-based homopolymer or copolymer. Specific examples of the olefin-based polymer may include polypropylene, polyethylene, copolymers of ethylene with α-olefin having 3 or more carbon atoms, copolymers of an α-olefin monomer with a vinyl monomer, ethylene-based copolymer rubbers, diene-based rubbers, polyisobutylene rubbers, etc. Specific examples of the α-olefin having 3 or more carbon atoms may include propylene, 1-butene, 1-pentene, 3-methyl-1-butene, 1-hexene, 1-decene, 3-methyl-1-pentene, 4-methyl-1-pentene, 1-octene and mixtures of these compounds. Specific examples of the ethylene-based rubbers may include ethylene-propylene copolymer rubbers, ethylene-propylene-diene copolymer rubbers, ethylene-octene copolymer rubbers, etc.

The content of the vinyl-based polymer segment in the component (i) is usually 1 to 95% by weight, preferably 5 to 80% by weight. Therefore, the content of the olefin-based polymer segment in the component (i) is usually 5 to 99% by weight, preferably 20 to 95% by weight. Examples of commercially available products of the multi-phase structure-type modified olefin compounds suitably used in the present invention may include "NOFALLOY" produced by NOF Corporation.

### <Component (j): antistatic agent>

In the present invention, as the component (j), there is used the antistatic agent having a structure in which a polyolefin block and a hydrophilic polymer block are alternately repeated and bonded to each other, wherein the hydrophilic polymer block contains a polyoxyalkylene ether unit having a structure derived from a divalent alcohol, a divalent phenol and/or a tertiary amino group-containing diol, and an alkyleneoxide.

The polyolefin block and hydrophilic polymer block forms have such a structure in which both the blocks are alternately repeated and bond to each other through a predetermined bonding group. The bonding group is at least one bond selected from the group consisting of an ester bond, an amide bond, an ether bond, an urethane bond and an imide bond. Of these bonds, preferred are an ester bond, an imide bond and/or an ether bond, more preferred are an ester bond and/or an imide bond, and still more preferred is an ester bond.

The polyolefin block may be derived from polyolefins having carbonyl groups at both ends thereof, polyolefins having hydroxyl groups at both ends thereof, polyolefins having amino groups at both ends thereof, etc. Examples of the polyolefins may include polymers or copolymers of one or more olefins having 2 to 30 carbon atoms, preferably 2 to 12 carbon atoms, more preferably 2 to 10 carbon atoms. Specific examples of the olefins may include ethylene, propylene, α-olefins having 4 to 12 carbon atoms, butadiene and isoprene. Of these olefins, preferred are ethylene, propylene, α-olefins having 4 to 12 carbon atoms and butadiene, and more preferred are propylene, ethylene and butadiene.

As the hydrophilic polymer, there may be used polyether diols, polyether diamines and modified product of these compounds.

As the polyether diols, there may be used polyether diols having such a structure obtained by addition reaction of an alkyleneoxide to a diol, for example, those compounds represented by the general formula: H-(OA1)ₘ-O-E1-O-(A1O) _{m'}-H (wherein E1 represents a residue obtained by removing hydroxyl groups from the diol; A1 represents an alkylene group having 2 to 12 carbon atoms, preferably 2 to 8 carbon atoms, more preferably 2 to 4 carbon atoms, which may contain a halogen atom; m and m' are respectively an integer of 1 to 300, preferably 2 to 250, more preferably 10 to 100, and m and m' may be the same or different). When m or m' is 2 or more, a plurality of (OA1) groups or a plurality of (A10) groups may be the same or different. When the (OA1) or (A10) group is constituted from two or more kinds of oxyalkylene groups, the type of a bond therebetween may be a block bond, a random bond or combination of these bonds.

Examples of the diol usable may include divalent alcohols having 2 to 12 carbon atoms, preferably 2 to 10 carbon atoms, more preferably 2 to 8 carbon atoms, for example, aliphatic, alicyclic or aromatic divalent alcohols, divalent phenols having 6 to 18 carbon atoms, preferably 8 to 18 carbon atoms, more preferably 10 to 15 carbon atoms, and tertiary amino-containing diols.

Examples of the aliphatic divalent alcohols may include ethyleneglycol, propyleneglycol, 1,4-butanediol, 1,6-hexanediol, neopentyl glycol and 1,12-dodecanediol.

Examples of the alicyclic divalent alcohols may include 1,4-cyclohexanediol, 1,4-cyclohexanedimethanol, 1,4-cyclooctanediol and 1,3-cyclopentanediol.

Examples of the aromatic divalent alcohols may include xylylenediol, 1-phenyl-1,2-ethanediol and 1,4-bis(hydroxyethyl)benzene.

Examples of the divalent phenols may include monocyclic divalent phenols such as hydroquinone, catechol, resorcinol and urushiol, bisphenols such as bisphenol A, bisphenol F, bisphenol S, 4,4'-dihydroxydiphenyl-2,2-butane and dihydroxybiphenyl, and condensed polycyclic divalent phenols such as dihydroxynaphthalene and binaphthol.

Examples of the tertiary amino group-containing diols may include bishydroxyalkylated compounds of aliphatic or alicyclic primary monoamines in which the the bishydroxyalkyl group has 1 to 12 carbon atoms, preferably 2 to 10 carbon atoms, more preferably 2 to 8 carbon atoms and the aliphatic or alicyclic primary monoamine has 1 to 12 carbon atoms, preferably 2 to 10 carbon atoms, more preferably 2 to 8 carbon atoms; and bishydroxyalkylated compounds of aromatic primary monoamines wherein the bishydroxyalkyl group has 1 to 12 carbon atoms and the aromatic primary monoamine has 6 to 12 carbon atoms.

Meanwhile, the bishydroxyalkylated compounds of monoamines may be readily produced by known methods. For example, the bishydroxyalkylated compounds of monoamines may be readily produced by reacting a monoamine with an alkyleneoxide having 2 to 4 carbon atoms such as ethyleneoxide, propyleneoxide and butyleneoxide, or by reacting a monoamine having 1 to 12 carbon atoms with a halogenated hydroxyalkyl compound having 1 to 12 carbon atoms such as 2-bromoethyl alcohol and 3-chloropropyl alcohol.

Examples of the aliphatic or alicyclic primary monoamines may include methyl amine, ethyl amine, cyclopropyl amine, 1-propyl amine, 2-propyl amine, amyl amine, isoamyl amine, hexyl amine, 1,3-dimethylbutyl amine, 3,3-dimethylbutyl amine, 2-aminoheptane, 3-aminoheptane, cyclopentyl amine, hexyl amine, cyclohexyl amine, heptyl amine, nonyl amine, decyl amine, undecyl amine and dodecyl amine. Examples of the aromatic primary monoamines may include aniline and benzyl amine.

Of these diols, preferred are divalent alcohols and divalent phenols, more preferred are aliphatic divalent alcohols and bisphenols, and still more preferred are ethyleneglycol and bisphenol A.

The polyether diols may be produced, for example, by addition reaction of an alkyleneoxide to a diol. As the alkyleneoxide, there may be used alkyleneoxides having 2 to 4 carbon atoms such as ethyleneoxide, propyleneoxide, 1,2-, 1,4-, 2,3- or 1,3-butyleneoxide, and mixtures of any two or more thereof. These alkyleneoxides may be used in combination with other alkyleneoxides or substituted alkyleneoxides. Examples of the other alkyleneoxides or substituted alkyleneoxides may include epoxidated products of α-olefins having 5 to 12 carbon atoms, styreneoxide, and epihalohydrins such as epichlorohydrin and epibromohydrin.

Examples of commercially available products of the antistatic agent suitably used in the present invention may include "PRESTAT" produced by Sanyo Chemical Industries, Ltd., etc.

### <Thermoplastic elastomer of the present invention>

The thermoplastic elastomer of the present invention comprises the above components (a) to (d) wherein a weight ratio of the component (a) to the component (b) ((a)/(b)) is 15:85 to 85:15; the component (c) is contained in an amount of 10 to 300 parts by weight based on 100 parts by weight of the component (a); and the component (d) is contained in an amount of 0.1 to 10 parts by weight based on 100 parts by weight of a total amount of the components (a) to (c).

When the weight ratio of the component (a) to the component (b) ((a)/(b)) is less than 15:85, namely the content of the olefin-based crystalline resin is largely excessive, the resultant thermoplastic elastomer tends to be deteriorated in flexibility. When the weight ratio of the component (a) to the component (b) ((a)/(b)) is more than 85:15, namely the content of the hydrogenated block copolymer is largely excessive, the resultant thermoplastic elastomer tends to be deteriorated in heat resistance. The weight ratio of the component (a) to the component (b) ((a)/(b)) is preferably 25:75 to 70:30.

When the content of the component (c) is less than 10 parts by weight, the resultant thermoplastic elastomer tends to be insufficient in fluidity upon molding. When the content of the component (c) is more than 30 parts by weight, the resultant thermoplastic elastomer tends to suffer from sticky touch feel. The content of the component (c) is preferably 40 to 200 parts by weight based on 100 parts by weight of the component (a).

When the content of the component (d) is out of the above-specified range, the resultant thermoplastic elastomer tends to be substantially deteriorated in properties inherent thereto, thereby failing to obtain a thermoplastic elastomer having an improved scratch resistance. The content of the component (d) is preferably 0.3 to 10 parts by weight based on 100 parts by weight of a total amount of the components (a) to (c).

The above component (e), namely the unmodified organopolysiloxane, is used for the purpose of further improving a scratch resistance of the thermoplastic elastomer in the preferred embodiment of the present invention. The content of the component (e) is usually 0.1 to 10 parts by weight, preferably 0.2 to 8 parts by weight based on 100 parts by weight of a total amount of the components (a) to (c). When the content of the component (e) is less than 0.1 part by weight, it is not possible to achieve the above purpose. When the content of the component (e) is more than 10 parts by weight, the resultant thermoplastic elastomer tends to suffer from slippage at the surface thereof. The thermoplastic elastomer containing the additional component (e) according to the present invention is suitably applied especially to "grips".

In the preferred embodiment of the present invention, the above component (f), namely the bamboo powder, is used for the purpose of improving a touch feel of the thermoplastic elastomer. The content of the component (f) is usually 0.1 to 10 parts by weight, preferably 0.2 to 5 parts by weight based on 100 parts by weight of a total amount of the components (a) to (c). When the content of the component (f) is less than 0.1 part by weight, it is not possible to achieve the above purpose. When the content of the component (f) is more than 10 parts by weight, the resultant molded product tends to suffer from flow marks at the surface thereof upon injection-molding, resulting in poor appearance thereof. Further, the particle size of the bamboo powder is usually 5 to 100 µm, preferably 5 to 60 µm. When the particle size of the bamboo powder is more than 100 µm, the resultant molded product tends to suffer from flow marks at the surface thereof upon molding. The thermoplastic elastomer containing the additional component (f) according to the present invention is suitably applied especially to "grips requiring a dry touch feel".

In the preferred embodiment of the present invention, the above component (g), namely LDPE and/or LLDPE, is used for the purpose of improving a touch feel of the thermoplastic elastomer. The content of the component (g) is usually 1 to 100 parts by weight, preferably 2 to 80 parts by weight based on 100 parts by weight of a total amount of the components (a) to (c). When the content of the component (g) is less than 1 part by weight, it is not possible to achieve the above purpose. When the content of the component (g) is more than 100 parts by weight, the resultant thermoplastic elastomer tends to be deteriorated in flexibility. The thermoplastic elastomer containing the additional component (g) according to the present invention is suitably applied especially to "grips requiring a dry touch feel".

In the preferred embodiment of the present invention, the above component (h), namely the high-density polyethylene resin, is used for the purpose of improving a moldability of the thermoplastic elastomer. More specifically, the thermoplastic elastomer containing the high-density polyethylene resin according to the present invention tends to hardly suffer from sink marks even when molded into a complicated shape or a non-flat thick wall shape having projected ribs, resulting in stable molding process. The content of the component (h) is usually 0.3 to 20 parts by weight, preferably 0.5 to 15 parts by weight based on 100 parts by weight of a total amount of the components (a) to (c). When the content of the component (h) is less than 0.3 part by weight, it is not possible to achieve the above purpose. When the content of the component (h) is more than 20 parts by weight, the resultant thermoplastic elastomer tends to be deteriorated in flexibility, and the surface of the molded product produced therefrom tends to suffer from flow marks. The thermoplastic elastomer containing the additional component (h) according to the present invention is suitably applied especially to "molded products which have a thick wall shape and are susceptible to sink marks".

In the preferred embodiment of the present invention, the above component (i), namely the specific multi-phase structure-type modified olefin compound, is used for the purpose of imparting a moistening touch feel to the thermoplastic elastomer. More specifically, the specific multi-phase structure-type modified olefin compound used in the present invention has such a structure in which a polar polymer is highly dispersed therein, and, therefore, is capable of enhancing a polarity of the surface of the resultant molded product and exhibiting a good moisture retention effect thereof, thereby imparting a moistening touch feel to the molded product. The content of the component (i) is usually 0.3 to 10 parts by weight, preferably 0.5 to 8 parts by weight based on 100 parts by weight of a total amount of the components (a) to (c). When the content of the component (i) is less than 0.3 part by weight, it is not possible to achieve the above purpose. When the content of the component (i) is more than 10 parts by weight, the resultant thermoplastic elastomer tends to be deteriorated in mechanical properties. The thermoplastic elastomer containing the additional component (i) according to the present invention is suitably applied especially to "grips requiring a moistening touch feel".

In the preferred embodiment of the present invention, the above component (j), namely the antistatic agent, is used for the purpose of imparting not only an antistatic performance but also a moistening touch feel to the thermoplastic elastomer. More specifically, the antistatic agent used in the present invention is free from blooming onto the surface of the thermoplastic elastomer, and capable of continuously keeping a good surface condition thereof without change, unlike the conventional surfactant-type antistatic agents. The content of the component (j) is usually 0.3 to 20 parts by weight, preferably 0.5 to 15 parts by weight based on 100 parts by weight of a total amount of the components (a) to (c). When the content of the component (j) is less than 0.3 part by weight, it is not possible to achieve the above purpose. When the content of the component (j) is more than 20 parts by weight, the resultant thermoplastic elastomer tends to be deteriorated in light resistance. The thermoplastic elastomer containing the additional component (j) according to the present invention is suitably applied especially to "molded products to be kept free from attachment of dusts".

The thermoplastic elastomer of the present invention may further contain various additives such as antioxidants, lubricants, ultraviolet absorbers, foaming agents, flame retardants, colorants and fillers. In particular, the use of antioxidants is preferable. Examples of the antioxidants may include monophenol-based antioxidants, bisphenol-based antioxidants, tri- or higher polyphenol-based antioxidants, thiobisphenol-based antioxidants, naphthylamine-based antioxidants, diphenylamine-based antioxidants and phenylenediamine-based antioxidants. Of these antioxidants, preferred are monophenol-based antioxidants, bisphenol-based antioxidants, tri- or higher polyphenol-based antioxidants and thiobisphenol-based antioxidants. The antioxidant may be used in an amount of usually 0.01 to 5 parts by weight, preferably 0.05 to 3 parts by weight based on 100 parts by weight of a total amount of the components used. When the amount of the antioxidant used is less than 0.01 part by weight, the antioxidant may fail to sufficiently exhibit its oxidation-preventing effect. Even when the amount of the antioxidant used is more than 5 part by weight, it is not possible to obtain the improving effect corresponding to the increase in amount of the antioxidant used.

In the present invention, as other thermoplastic resins other than the essential components, there may be used polyphenylene ether-based resins, polyamide-based resins such as nylon 6 and nylon 66, polyester-based resins such as polyethylene terephthalate and polybutylene terephthalate, polyoxymethylene-based resins such as polyoxymethylene homopolymers and polyoxymethylene copolymers, polymethyl methacrylate-based resins, polystyrene-based resins, biodegradable resins, resins derived from plants, etc. Further, examples of the rubber component usable in the present invention may include olefin-based rubbers such as ethylene-propylene copolymer rubbers and ethylene-propylene-non-conjugated diene copolymer rubbers, polybutadiene, and styrene-based copolymer rubbers other than the essential components.

### <Thermoplastic elastomer of the present invention>

The feature of the thermoplastic elastomer according to the first aspect of the present invention lies in that at least the components (a) and (d) are respectively dynamically heat-treated in the presence of the organic peroxide.

The dynamic heat treatment may be conducted by a method in which the whole essential components used in the present invention are collectively mixed with each other and subjected to the dynamic heat treatment at one time, or a method in which the respective components are separately subjected to the dynamic heat treatment, for example, a method in which a mixture of the components (a), (c) and (d) and the organic peroxide is first subjected to dynamic heat treatment, and then the remaining other components are subsequently subjected to the dynamic heat treatment. In any of these methods, it is required to dynamically heat-treat at least the components (a) and (d) in the presence of the organic peroxide. Such a dynamic heat treatment allows the component (a) such as the styrene block copolymer to be reacted with the acryl-modified organopolysiloxane as the component (d).

Examples of the organic peroxide usable in the present invention may include dimethyl peroxide, di-t-butyl peroxide, 2,5-dimethyl-2,5-di-(t-butylperoxy)hexane, 2,5-dimethyl-2,5-di-(t-butylperoxy)hexyn-3, 1,3-bis(t-butylperoxyisopropyl)benzene, 1,1-bis(t-butylperoxy)-3,3,5-trimethyl cyclohexane, n-butyl-4,4-bis(t-butylperoxy)valerate, benzoyl peroxide, p-chlorobenzoyl peroxide, 2,4-dichlorobenzoyl peroxide, t-butylperoxy benzoate, t-butylperoxyisopropyl carbonate, diacetyl peroxide, lauryl peroxide and t-butylcumyl peroxide. Of these organic peroxides, preferred are 2,5-dimethyl-2,5-di-(t-butylperoxy)hexane, 2,5-dimethyl-2,5-di-(t-butylperoxy)hexyn-3, 1,3-bis(t-butylperoxyisopropyl)benzene, 1,1-bis(t-butylperoxy)-3,3,5-trimethyl cyclohexane and n-butyl-4,4-bis(t-butylperoxy)valerate. Meanwhile, these organic peroxides may be used in combination of any two or more thereof.

The amount of the organic peroxide used is not particularly limited, and is usually 0.05 to 3 parts by weight, preferably 0.1 to 2 parts by weight based on 100 parts by weight of a total amount of the components used. When the amount of the organic peroxide used is too small, the reaction between the respective components may fail to proceed sufficiently. When the amount of the organic peroxide used is too large, the olefin-based crystalline resin, etc., tend to be deteriorated.

In the present invention, upon the dynamic heat treatment (i.e., crosslinking treatment with the organic peroxide), the organic peroxide may be used in combination with peroxy-based assistants such as sulfur, p-quinone dioxime, p,p'-dibenzoylquinone dioxime, N-methyl-N-4-dinitroso aniline, nitroso benzene, diphenyl guanidine and trimethylolpropane-N,N'-m-phenylene dimaleimide; polyfunctional methacrylate monomers such as divinyl benzene, triallyl cyanurate, ethyleneglycol dimethacrylate, diethyleneglycol dimethacrylate, polyethyleneglycol dimethacrylate, trimethylolpropane trimethacrylate and allyl methacrylate; and polyfunctional vinyl monomers such as vinyl butyrate and vinyl acetate. The amount of the peroxy-based assistant, the polyfunctional methacrylate monomer or the polyfunctional vinyl monomer blended is usually 0.1 to 5 parts by weight, preferably 0.2 to 4 parts by weight based on 100 parts by weight of a total amount of the components used.

Examples of the mixing apparatus used upon the dynamic heat treatment may include a Henschel mixer, a ribbon blender and a V-type blender, and examples of the kneading apparatus used may include a mixing roll, a kneader, a Banbury mixer, a brabender plastograph, a single-screw extruder and a twin-screw extruder. The kneading temperature is usually 100 to 300°C, preferably 110 to 280°C, and the kneading time is usually from 10 seconds to 30 minutes, preferably from 20 seconds to 20 minutes.

In a preferred embodiment, present invention provides a thermoplastic elastomer wherein the strength (S1) of a silicon element in a surface portion of the thermoplastic elastomer after immersing the thermoplastic elastomer in tetrahydrofuran (THF) at an ordinary temperature for 10 minutes as measured by X-ray fluorescence analysis is higher by 2 (kcps) or more, than the strength (S2) of the silicon element in a surface portion of the non-immersed thermoplastic elastomer as measured by X-ray fluorescence analysis. The "ordinary temperature" may be 25°C.

The X-ray fluorescence analysis is such a method in which X-rays are separated from each other on the basis of difference in wavelength thereof using an analyzing crystal, and detected by an X-ray detector such as a scintillator to determine kinds and amounts of elements contained in a sample, thereby enabling quantitative determination of materials containing specific elements.

In the present invention, the fluorescent X-ray measurement may be conducted using an X-ray fluorescence analyzer as a measuring apparatus under the following conditions shown in Table 1 below.

**Table 1**

| | |
|---|---|
| Diameter of collimeter mask | 27 mm |
| X-ray tube | Rh bulb; 32 kV; 125 mA; filter: none |
| Spectrometer | PE crystal; collimeter 300 µm; start angle (°, 2θ) 104.2034 to end angle 114.2034; step width: 0.0500; time: 200s |
| Detector | gas flow-type proportional counter |
| Element to be detected | Si (7.1 to 7.2A) |

In the present invention, Si has been noticed as the element to be detected, and the above strength of the silicon element is measured under the above-mentioned conditions.

When the strength (S1) is not higher than the strength (S2) by 2 (kcps) or more, the resultant thermoplastic elastomer tends to be deteriorated in touch feel and abrasion resistance. The strength (S1) is preferably higher than the strength (S2) by 5 (kcps) or more. Meanwhile, although the difference between the strengths (S1) and (S2) is not particularly limited, the upper limit of the difference between the strengths (S1) and (S2) is usually 50 (kcps).

In the thermoplastic elastomer of the present invention, the reason why the difference between the strengths (S1) and (S2) has an interrelation with the touch feel and abrasion resistance of the thermoplastic elastomer, is considered as follows, though it is not known clearly.

That is, the thermoplastic elastomer of the present invention is actually produced by subjecting at least the components (a) and (d) to dynamic heat treatment in the presence of the organic peroxide. Such a dynamic heat treatment allows the component (a) such as the styrene block copolymer to be reacted with the acryl-modified organopolysiloxane as the component (d).

The acryl-modified organopolysiloxane is such a compound produced by acryl-modifying an organopolysiloxane to enhance a compatibility of the organopolysiloxane with resins. However, the acryl-modified organopolysiloxane still maintains a less compatibility with resins which is inherent to the organopolysiloxane and, therefore, tends to be agglomerated together in the resins, i.e., may fail to be microscopically uniformly dispersed in the resins. In the case of the thermoplastic elastomer (A) obtained by subjecting at least the components (a) and (d) to the dynamic heat treatment in the presence of the organic peroxide, at least a part of the acryl-modified organopolysiloxane is present in a state reacted with the styrene block copolymer (i.e., in a fixed state), and, therefore, stabilized and hardly agglomerated together. Accordingly, the thermoplastic elastomer (A) is more excellent in dispersibility of the acryl-modified organopolysiloxane as compared to the thermoplastic elastomer (B) which is not subjected to the dynamic heat treatment in the presence of the organic peroxide.

When the thermoplastic elastomer undergoes continuous rubbing or abrasion operation upon handling, the styrene block copolymer together with other components are peeled off from the surface of the thermoplastic elastomer whereupon the styrene block copolymer which tends to exhibit a stickiness acts as a base point of the peeling-off. The thus peeled-off components are re-agglomerated together, thereby further accelerating rubbing or abrasion of the surface of the thermoplastic elastomer. In such a case, in the thermoplastic elastomer (A), since the styrene block copolymer is kept in the state reacted with the acryl-modified organopolysiloxane, and the acryl-modified organopolysiloxane has a high dispersibility, the acryl-modified organopolysiloxane can exhibit the effect of preventing rubbing-off or abrasion of the surface of the thermoplastic elastomer. Further, even though the styrene block copolymer is peeled off from the surface of the thermoplastic elastomer, since the acryl-modified organopolysiloxane is fixed in the styrene block copolymer and, therefore, hardly agglomerated together, the re-agglomeration of the styrene block copolymer can be effectively prevented, thereby exhibiting a good abrasion-resisting effect. In such a surface portion of the thermoplastic elastomer, there is present a large amount of the styrene block copolymer reacted with the acryl-modified organopolysiloxane which is generated by rubbing or abrasion thereof, resulting in increased concentration of the acryl-modified organopolysiloxane in the surface portion. On the other hand, in the thermoplastic elastomer (B), the acryl-modified organopolysiloxane exhibits a poor abrasion-resisting effect due to poor dispersibility thereof, and the styrene block copolymer which is peeled off from the surface of the thermoplastic elastomer tends to be re-agglomerated together, since the acryl-modified organopolysiloxane is not stably present in the styrene block copolymer, so that the surface of the thermoplastic elastomer tends to suffer from rubbing-off or abrasion. In such a surface portion of the thermoplastic elastomer (B), even though the amount of the styrene block copolymer present on the surface is increased, the concentration of the acryl-modified organopolysiloxane present thereon is not increased.

The above handling effect of the thermoplastic elastomer can be realized by an acceleration test in which the thermoplastic elastomer to be tested is immersed in a tetrahydrofuran (THF) solution at an ordinary temperature for 10 minutes. As a result of the above test, it has been confirmed that on the basis of the grafting structure of the acryl-modified organopolysiloxane, the thermoplastic elastomer (A) of the present invention has such a feature that the strength (S1) of a silicon element in the surface portion thereof after immersing the thermoplastic elastomer in a tetrahydrofuran (THF) solution at an ordinary temperature for 10 minutes as measured by X-ray fluorescence analysis is higher than by 2 (kcps) or more, than the strength (S2) of the silicon element in the surface portion of the non-immersed thermoplastic elastomer as measured by X-ray fluorescence analysis. Owing to such a feature, the thermoplastic elastomer (A) of the present invention is excellent in touch feel and abrasion resistance, i.e., a less stickiness, and the same effect can be attained even when the thermoplastic elastomer is subjected to continuous rubbing or abrasion upon handling. The thermoplastic elastomer according to the preferred embodiment of the present invention is further excellent in dry touch feel or moistening touch feel in addition to the above properties.

The thermoplastic elastomer of the present invention may be molded into various products such as vehicle interior and exterior trim materials for automobiles, building interior and exterior materials, and gaskets for vehicles such as automobiles, electric equipments and buildings, which include packings, pointing agents and sealants, and sundries, using various molding machines such as an injection-molding machine, a single-screw extrusion-molding machine, a twin-screw extrusion-molding machine, a compression-molding machine and a calendering machine. Among these products, the effects of the present invention can be more remarkably exhibited when the thermoplastic elastomer is applied to grips.

As described above, the thermoplastic elastomer of the present invention contains the components (a) to (d) as essential components, and further contains the optional components (e) to (j) according to the purposes and applications thereof. In particular, the thermoplastic elastomer containing the optional component (e), namely the composition containing the components (a) to (e) according to the present invention, can be generally used in extensive applications. In the composition composed of the components (a) to (e), although the contents of the respective components on the basis of the amount of the components (a) and (b) are previously described, the contents by percent of the respective components on the basis of the total amount of the components (a) to (e) as 100% by weight are as follows.

That is, the content of the component (a) is 8 to 80% by weight; the content of the component (b) is 3 to 85% by weight with the proviso that the weight ratio of the component (a) to the component (b) ((a)/(b)) is 15:85 to 85:15; the content of the component (c) is 1 to 70% by weight; the content of the component (d) is 0.5 to 10% by weight; and the content of the component (e) is 0.1 to 10% by weight with the proviso that the total amount of the components (a) to (e) is 100% by weight.

When the content of the component (a) is less than 8% by weight, the resultant thermoplastic elastomer tends to be deteriorated in flexibility. When the content of the component (a) is more than 80% by weight, the resultant thermoplastic elastomer tends to be deteriorated in mechanical properties such as tensile strength and heat resistance. The content of the component (a) is preferably 15 to 65% by weight. When the content of the component (b) is less than 3% by weight, the resultant thermoplastic elastomer tends to be deteriorated in heat resistance. When the content of the component (b) is more than 85% by weight, the resultant thermoplastic elastomer tends to be deteriorated in flexibility. The content of the component (b) is preferably 8 to 70% by weight. When the weight ratio of the component (a) to the component (b) is less than 15:85, i.e., the content of the olefin-based crystalline resin is largely excessive, the resultant thermoplastic elastomer tends to be deteriorated in flexibility. When the weight ratio of the component (a) to the component (b) is more than 85:15, i.e., the content of the hydrogenated block copolymer is largely excessive, the resultant thermoplastic elastomer tends to be deteriorated in heat resistance. The weight ratio of the component (a) to the component (b) is preferably 25:75 to 70:30. When the content of the component (c) is less than 1% by weight, the resultant thermoplastic elastomer tends to be deteriorated in fluidity upon molding. When the content of the component (c) is more than 70% by weight, the resultant thermoplastic elastomer tends to suffer from stickiness. The content of the component (c) is preferably 5 to 60% by weight. When the content of the component (d) is out of the above-specified range, the resultant thermoplastic elastomer tends to be substantially deteriorated in properties inherent to thermoplastic elastomers, thereby failing to obtain a thermoplastic elastomer having an improved scratch resistance. The content of the component (d) is preferably 1 to 7% by weight. When the content of the component (e) is out of the above-specified range, the resultant thermoplastic elastomer tends to be substantially deteriorated in properties inherent to thermoplastic elastomers, thereby failing to obtain a thermoplastic elastomer having an improved scratch resistance. The content of the component (e) is preferably 0.2 to 7% by weight.

### EXAMPLES

The present invention is described in more detail by Examples, but the following Examples are only illustrative and not intended to limit the scope of the present invention. The materials and evaluation methods used in Examples and Comparative Examples are as follows.

### <Production of thermoplastic elastomer>

In Examples 1 to 14 and Comparative Examples 1 to 4, a mixture containing the respective components at a mixing ratio as shown in Tables 3 to 5 was mixed with 0.1 part by weight of tetrakis[methylene-3-(3',5'-di-t-butyl-4'-hydroxyphenyl)propionate]methane as a stabilizer ("IRGANOX 1010" produced by Ciba Specialty Chemicals Co., Ltd.). The resultant mixture was mixed together using a Henschel mixer, fed to a twin-screw extruder "BT-30" (L/D = 30; unidirectional rotation type) manufactured by PLABOR Co., Ltd., using a weight-type feeder, and then extruded therefrom at 210°C and a screw rotating speed of 200 rpm (dynamic heat treatment), thereby obtaining a thermoplastic elastomer composition. The thus obtained thermoplastic elastomer composition was fed to a molding apparatus "CN-75" manufactured by Niigata Tekkosho Co., Ltd., and injection-molded therefrom at a cylinder temperature of 200°C and a mold temperature of 40°C, thereby preparing a predetermined test piece.

### <Raw materials used>

### (1) Hydrogenated block copolymer-1:

Hydrogenated product of styrene-butadiene/isoprene block copolymer having a copolymerization structure of styrene block-butadiene/isoprene block-styrene block (styrene content: 30% by weight; hydrogenation percentage: not less than 98%; weight-average molecular weight: 243,000).

### (2) Hydrogenated block copolymer-2:

Hydrogenated product of styrene-butadiene block copolymer having a copolymerization structure of styrene block-butadiene block-styrene block (styrene content: 33% by weight; hydrogenation percentage: not less than 98%; weight-average molecular weight: 245,000).

### (3) Hydrogenated block copolymer-3:

Hydrogenated product of styrene-butadiene block copolymer having a copolymerization structure of styrene block-butadiene block-styrene block (styrene content: 29% by weight; hydrogenation percentage: not less than 98%; weight-average molecular weight: 75,000).

### (4) Olefin-based crystalline resin-1:

Polypropylene (melt flow rate: 10 g/10 min as measured at 230°C under a load of 21.2 N).

### (5) Olefin-based crystalline resin-2:

Polypropylene (melt flow rate: 30 g/10 min as measured at 230°C under a load of 21.2 N).

### (6) Hydrocarbon-based softening agent for rubbers:

Paraffin-based oil (weight-average molecular weight: 746; kinematic viscosity at 40°C: 382 mm²/s; pour point: - 15°C; flash point: 300°C).

### (7) Acryl-modified organopolysiloxane:

Compound produced by the following method.

### <Production of organopolysiloxane emulsion>

1,500 parts by weight of octamethylcyclotetrasiloxane, 3.8 parts by weight of methacryloxypropylmethylsiloxane and 1,500 parts by weight of ion-exchanged water were mixed with each other, and the resultant mixture was further mixed with 15 parts by weight of sodium laurylsulfate and 10 parts by weight of dodecylbenzenesulfonic acid, and then stirred and emulsified using a homomixer. The thus obtained emulation was passed through a homogenizer under a pressure of 3,000 bar two times, thereby producing a stable emulsion. Next, the resultant emulsion was charged into a flask, heated at 70°C for 12 hours, cooled to 25°C, and then aged for 24 hours. Thereafter, the resultant emulsion was treated with sodium carbonate to adjust a pH value thereof to 7. After a nitrogen gas was blown into the emulsion for 4 hours, the emulsion was subjected to steam distillation to remove volatile siloxane therefrom. Next, the resultant emulsion was mixed with ion-exchanged water to adjust a non-volatile content therein to 45% by weight.

### <Copolymerized emulsion>

333 parts by weight of the above-obtained emulsion (siloxane content: 150 parts by weight) and 517 parts by weight of ion-exchanged water were charged into a 2L three-necked flask equipped with a stirrer, a condenser, a thermometer and a nitrogen gas inlet. After an inside of the flask was heated to 30°C under a nitrogen gas flow, 1.0 part by weight of t-butylhydroperoxide, 0.5 part by weight of L-ascorbic acid and 0.002 part by weight of ferrous sulfate heptahydrate were added thereto. Next, while maintaining the temperature of an inside of the flask at 30°C, 350 parts by weight of butyl acrylate was dropped thereinto for 3 hours. After completion of the dropping, the resultant mixture was further stirred for 1 hour to complete the reaction. It was confirmed that the thus obtained copolymerized emulsion had a solid concentration of 41.3% by weight.

### <Dry-up>

1000 parts by weight of the above emulsion was charged into a container equipped with a stirrer, heated to 80°C, and then mixed with a solution prepared by dissolving 92 parts by weight of sodium sulfate in 563 parts by weight of pure water to crystallize an acryl-modified organopolysiloxane. The thus crystallized product was repeatedly subjected to filtration, water-washing and dehydration, and then dried at 60°C, thereby obtaining the acryl-modified organopolysiloxane.

### (8) Unmodified organopolysiloxane:

Rubber-like dimethyl polysiloxane having a specific gravity of 0.98, a refractive index of 1.04, and a viscosity of not less than 17,100,000 mm²/s as measured at 25°C according to JIS K2283. The viscosity thereof was determined by dividing a viscosity thereof measured using a rotational viscometer "B8U" (manufactured by Tokyo Keiki Co., Ltd.) prescribed in JIS K7117 by a specific gravity thereof.

### (9) Bamboo powder:

Bamboo powder (produced from thick-stemmed bamboo) having a particle size of 40 µm.

### (10) Low-density polyethylene resin:

"NOVATEC LD" produced by Nippon Polyethylene Co., Ltd. (melt flow rate: 14 g/10 min as measured at 190°C under a load of 21.2 N).

### (11) High-density polyethylene resin:

"NOVATEC HD" produced by Nippon Polyethylene Co., Ltd. (melt flow rate: 0.2 g/10 min as measured at 190°C under a load of 21.2 N).

### (12) Multi-phase structure-type modified olefin compound:

"NOFALLOY" produced by NOF Corporation.

### (13) Permanent antistatic agent:

"PELESTAT" produced by Sanyo Chemical Industries, Ltd.

### (14) Organic peroxide:

2,5-dimethyl-2,5-di(t-butylperoxy)hexane.

### <Measurement of properties and testing methods>

### (1) Measurement of strength of silicon element by X-ray fluorescence analysis:

The strength of silicon element was measured using an X-ray fluorescence analyzer "Magix PRO" (manufactured by Spectris Co., Ltd.) under the conditions described in the present specification. Also, the measurement after immersion in THF was conducted by immersing a molded product in a THF solution for 10 min, using the same apparatus as above.

### (2) Tensile test:

The injection-molded sheet was measured according to JIS K6251.

### (3) Scratch resistance:

The injection-molded sheet was scratched with nails to observe traces of scratches on the surface of the sheet. The observation results are classified into the following three evaluation ranks.
Good: Substantially no scratches observed:
Fair: Scratches slightly observed; and
Poor: Considerable scratches observed.

### (4) Abrasion resistance:

A designed surface of a sheet injection-molded within a embossed mold was subjected to a rubbing test using a laboratory vibration-testing type abrasion tester under a load of 500 g by 3,000 strokes, and then visually observed to examine the condition of residual embosses on the designed surface. The results of the observation are classified into the following three ranks.
Good: Substantially no abrasion traces of embosses without change from the condition before test;
Fair: Slight abrasion of embosses, but embosses still remained; and
Poor: Considerable abrasion on the embossed surface, and embosses were eliminated.

### (5) Touch feel 1 (stickiness):

The surface of an injection-molded product was grasped with hands to evaluate whether or not any sticky feel remained on the surface of hands. The results of the evaluation are classified into the following three ranks.
Good: No sticky feel remained on the surface of hands;
Fair: Slight sticky feel remained; and
Poor: Considerable sticky feel remained.

### (6) Touch feel 2 (dry feel):

Upon the evaluation of the touch feel 1, the dry touch feel was further evaluated. The results of the evaluation are classified into the following three ranks.
Good: Excellent dry touch feel;
Fair: Slight dry touch feel; and
Poor: No dry touch feel.

### (7) Touch feel 2 (moistening feel):

Upon the evaluation of the touch feel 1, the moistening touch feel was further evaluated. The results of the evaluation are classified into the following three ranks.
Good: Excellent moistening touch feel;
Fair: Slight moistening touch feel; and
Poor: No moistening touch feel.

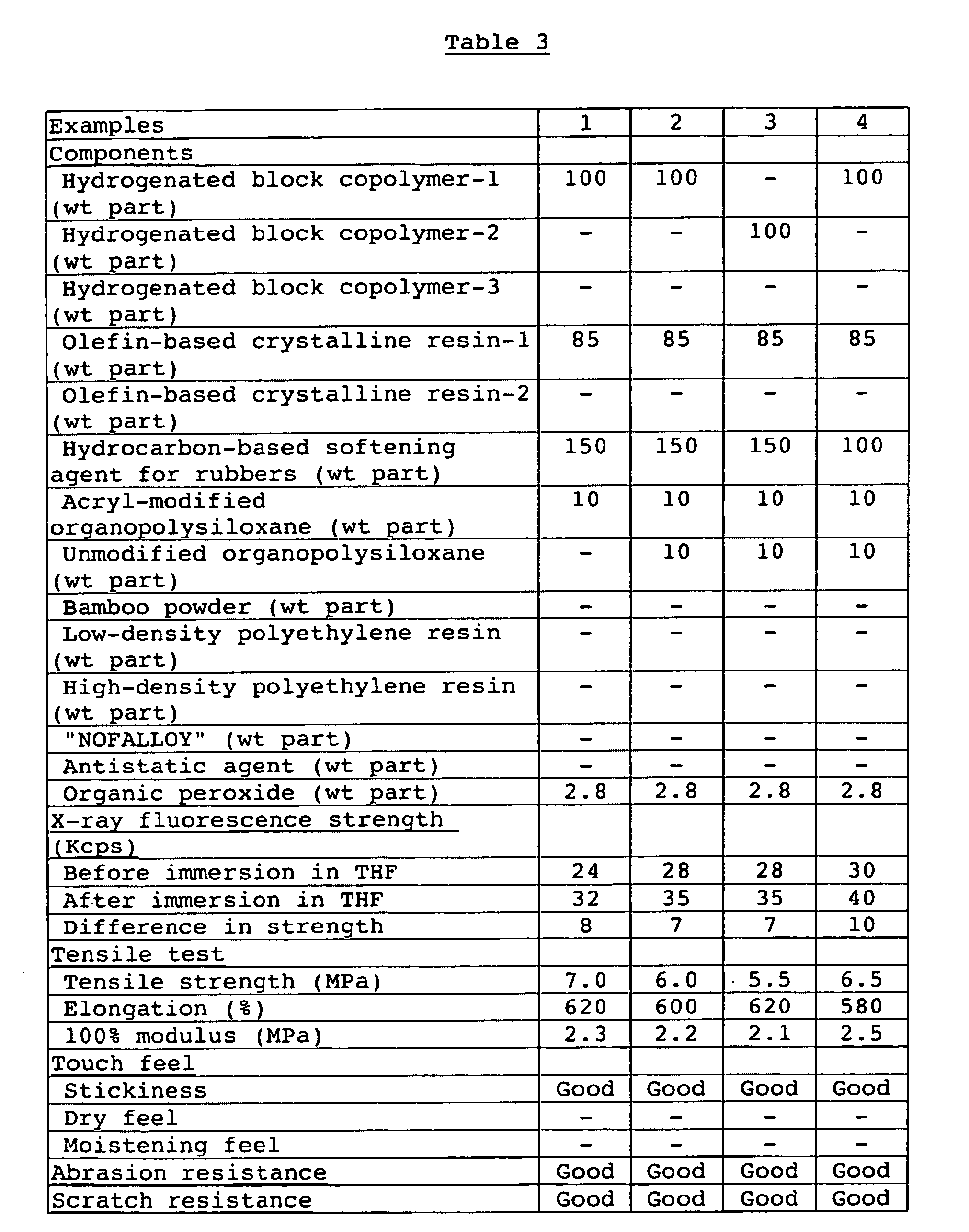

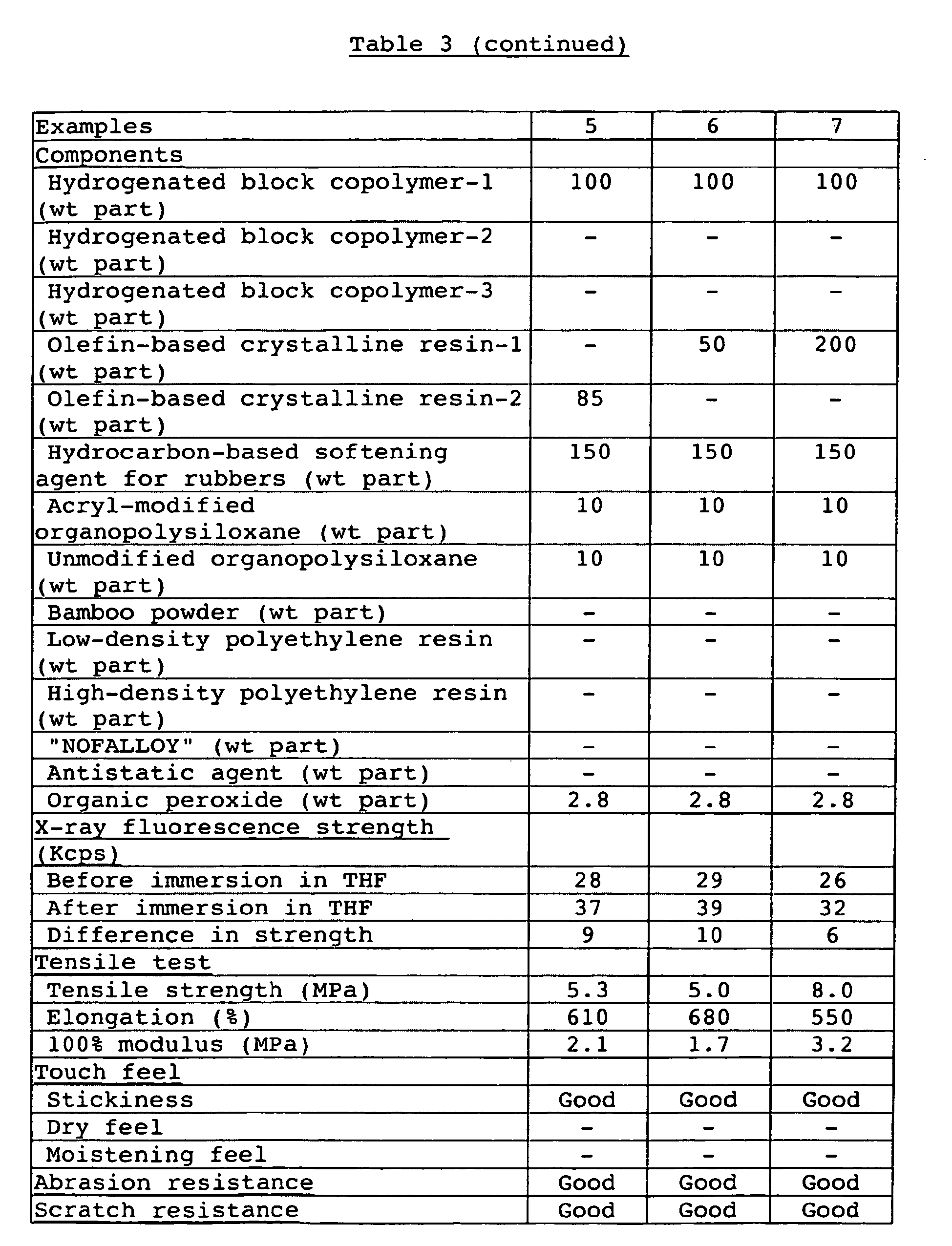

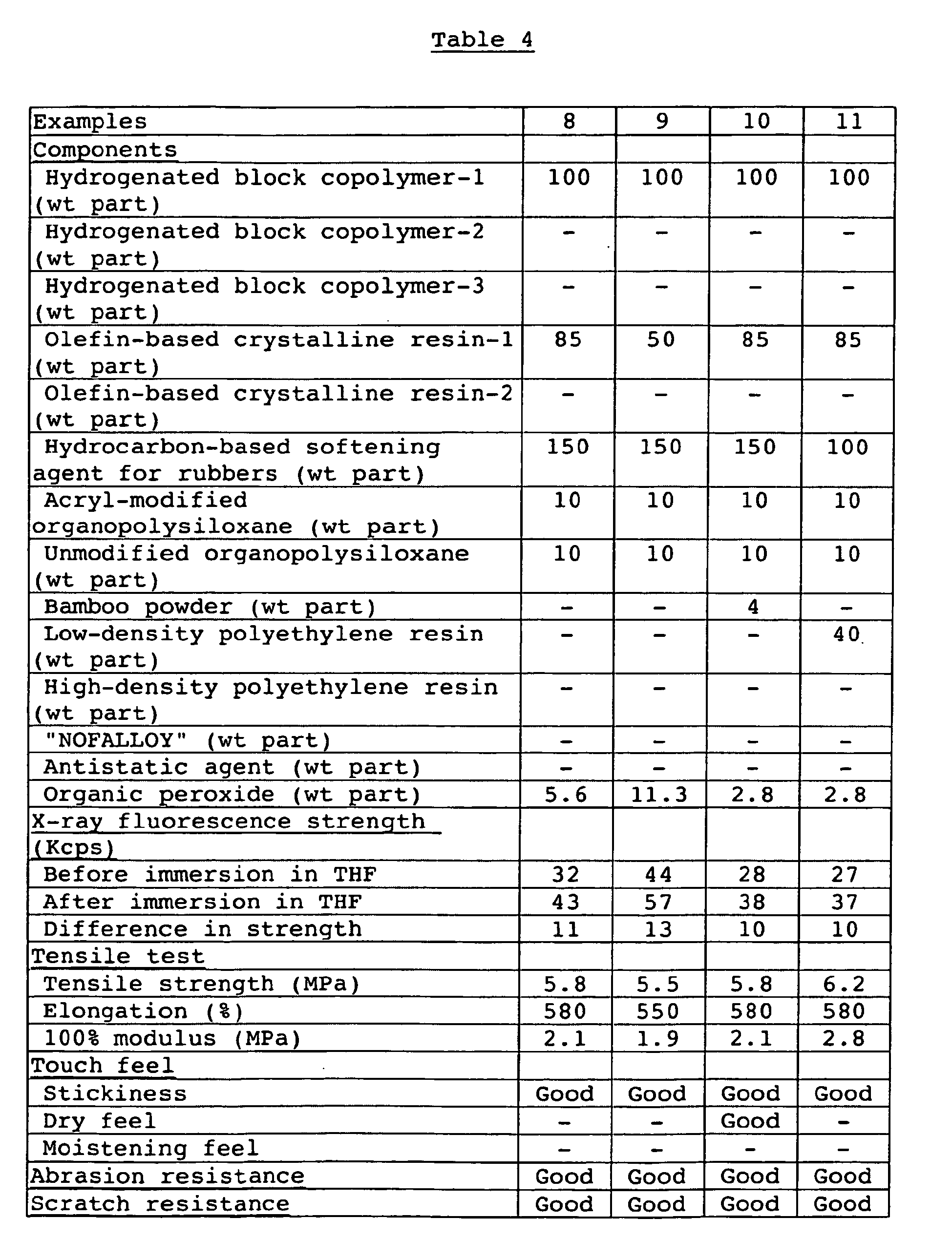

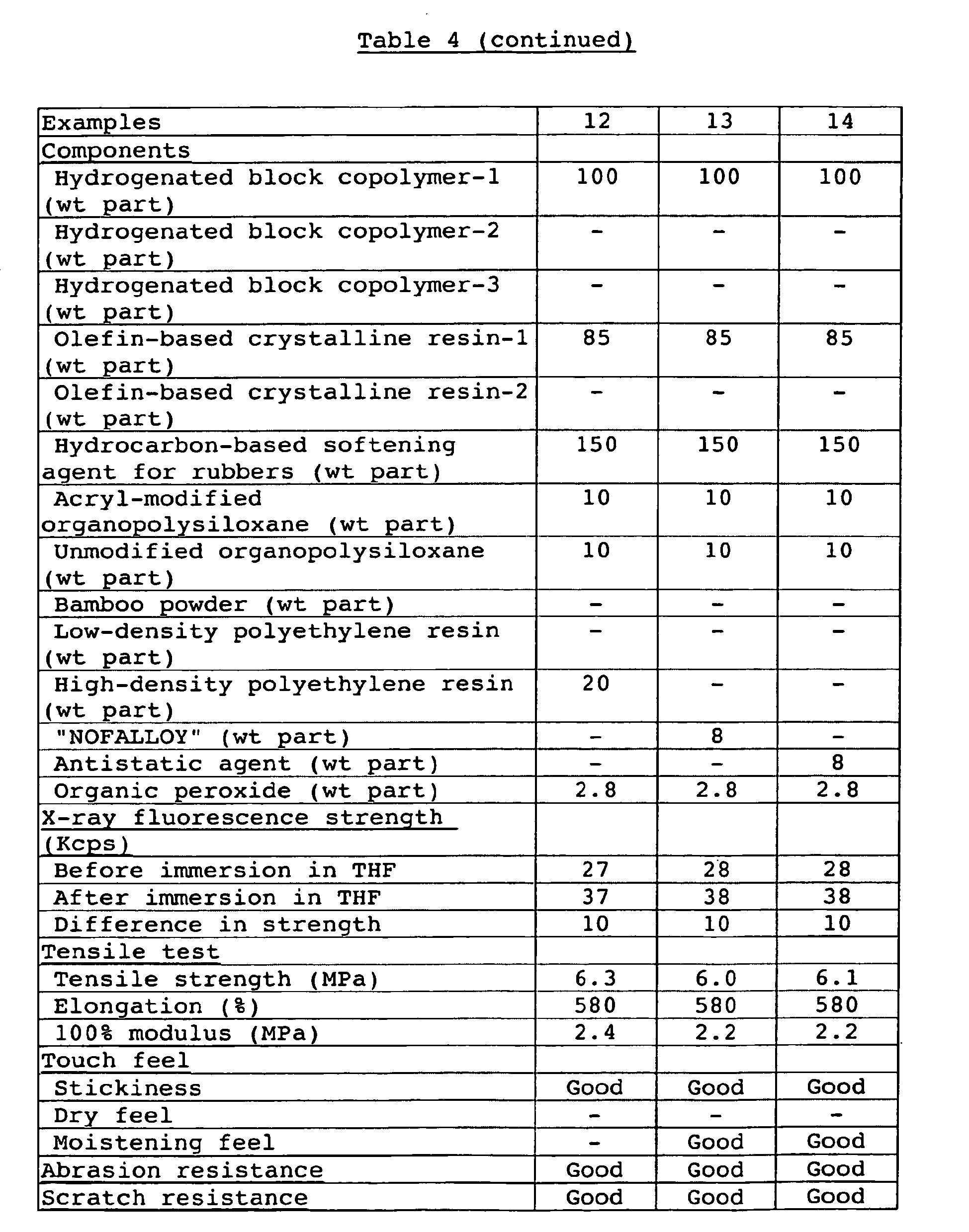

**Table 5**

| Comparative Examples | 1 | 2 | 3 | 4 |
|---|---|---|---|---|
| Components | | | | |
| Hydrogenated block copolymer-1 (wt part) | 100 | 100 | - | 100 |
| Hydrogenated block copolymer-2 (wt part) | - | - | - | - |
| Hydrogenated block copolymer-3 (wt part) | - | - | 100 | - |
| Olefin-based crystalline resin-1 (wt part) | 85 | 85 | 85 | 85 |
| Olefin-based crystalline resin-2 (wt part) | - | - | - | - |
| Hydrocarbon-based softening agent for rubbers (wt part) | 150 | 150 | 150 | 100 |
| Acryl-modified organopolysiloxane (wt part) | 10 | 10 | 10 | - |
| Unmodified organopolysiloxane (wt part) | - | 10 | 10 | 10 |
| Bamboo powder (wt part) | - | - | - | - |
| Low-density polyethylene resin (wt part) | - | - | - | - |
| High-density polyethylene resin (wt part) | - | - | - | - |
| "NOFALLOY" (wt part) | - | - | - | - |
| Antistatic agent (wt part) | - | - | - | - |
| Organic peroxide (wt part) | - | - | 2.8 | 2.8 |
| X-ray fluorescence strength | | | | |
| (Kcps) | | | | |
| Before immersion in THF | 22 | 28 | 28 | 22 |
| After immersion in THF | 23 | 29 | 35 | 22 |
| Difference in strength | 1 | 1 | 7 | 1 |
| Tensile test | | | | |
| Tensile strength (MPa) | 11 | 11 | 7 | 11 |
| Elongation (%) | 730 | 730 | 720 | 740 |
| 100% modulus (MPa) | 2.6 | 2.6 | 2.5 | 2.6 |
| Touch feel | | | | |
| Stickiness | Poor | Poor | Fair | Fair |
| Dry feel | - | - | - | - |
| Moistening feel | - | - | - | - |
| Abrasion resistance | Fair | Fair | Fair | Poor |
| Scratch resistance | Poor | Fair | Fair | Fair |

## Claims

1. A thermoplastic elastomer comprising:
(a) a hydrogenated block copolymer having a weight-average molecular weight of 80,000 to 1,000,000, which is obtainable by hydrogenating an (A)-(B) type block copolymer and/or an (A)-(B)-(A) type block copolymer wherein (A) represents a vinyl aromatic compound block and (B) represents a conjugated diene polymer block, such that at least 90% of double bonds of the conjugated diene moiety of the block copolymers are saturated;
(b) an olefin-based crystalline resin;
(c) a hydrocarbon-based softening agent for rubbers; and
(d) an acryl-modified organopolysiloxane,
wherein the weight ratio of the component (a) to the component (b) ((a)/(b)) is 15:85 to 85:15; the component (c) is contained in an amount of 10 to 300 parts by weight based on 100 parts of weight of the component (a); the component (d) is contained in an amount of 0.1 to 10 parts by weight based on 100 parts by weight of the total amount of the components (a) to (c); and at least the components (a) and (d) are dynamically heat-treated in the presence of an organic peroxide.

2. A thermoplastic elastomer according to claim 1, wherein the strength (S1) of silicon element in a surface portion of the thermoplastic elastomer after immersing the thermoplastic elastomer in tetrahydrofuran (THF) at an ordinary temperature for 10 minutes as measured by X-ray fluorescence analysis is higher by 2 kcps or more, than the strength (S2) of silicon element in a surface portion of the non-immersed thermoplastic elastomer as measured by X-ray fluorescence analysis.

3. A thermoplastic elastomer according to claim 2, wherein the strength (S1) is higher than the strength (S2) by 5 kcps or more.

4. A thermoplastic elastomer according to any one of claims 1 to 3, wherein the component (d) is an acryl-modified organosiloxane obtainable by graft-polymerizing a (meth)acrylic ester (d2) or a mixture containing not less than 70% by weight of the (meth)acrylic ester (d2) and not more than 30% by weight of other monomer (d3) copolymerizable with the component (d2) to an organopolysiloxane (d1) represented by the following general formula at a weight ratio of 5:95 to 95:5: 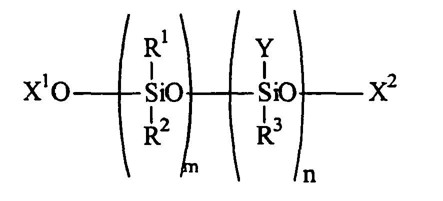 wherein R¹, R² and R³ are each independently a substituted or unsubstituted hydrocarbon group having 1 to 20 carbon atoms; Y is a radical reactive group or an organic group containing -SH group; X¹ and X² are each independently a hydrogen atom, a lower alkyl group or -SiR⁴R⁵R⁶ wherein R⁴, R⁵ and R⁶ are each independently a substituted or unsubstituted hydrocarbon group having 1 to 20 carbon atoms, a radical reactive group or an organic group containing -SH group; m is an integer of not more than 10,000; n is an integer of not less than 1; and the siloxane chain of the organopolysiloxane may be branched.

5. A thermoplastic elastomer according to any one of claims 1 to 4, wherein the component (b) is a polypropylene-based crystalline resin.

6. A thermoplastic elastomer according to any one of claims 1 to 5, further comprising (e) an unmodified organopolysiloxane having a viscosity of not less than 10,000 mm²/s as measured at 25°C according to JIS K2283, wherein the component (e) is contained in an amount of 0.1 to 10 parts by weight based on 100 parts by weight of the total amount of the components (a) to (c).

7. A thermoplastic elastomer according to any one of claims 1 to 6, further comprising (f) a bamboo powder in an amount of 0.1 to 10 parts by weight based on 100 parts by weight of the total amount of the components (a) to (c).

8. A thermoplastic elastomer according to any one of claims 1 to 7, further comprising (g) a low-density polyethylene resin and/or a linear low-density polyethylene resin in an amount of 1 to 100 parts by weight based on 100 parts by weight of the total amount of the components (a) to (c).

9. A thermoplastic elastomer according to any one of claims 1 to 8, further comprising (h) a high-density polyethylene resin in an amount of 0.3 to 5 parts by weight based on 100 parts by weight of the total amount of the components (a) to (c).

10. A thermoplastic elastomer according to any one of claims 1 to 9, further comprising (i) a multi-phase structure-type modified olefin compound comprising a vinyl-based polymer segment produced from at least one vinyl monomer selected from (meth)acrylic acid, a (meth)acrylic alkyl ester and a vinyl monomer containing a (meth)acrylic glycidyl group, and an olefin-based polymer segment in an amount of 0.3 to 10 parts by weight based on 100 parts by weight of the total amount of the components (a) to (c), wherein the vinyl-based polymer segment is dispersed in the olefin-based polymer segment in the form of fine particles having a particle size of 0.01 to 10 mm.

11. A thermoplastic elastomer according to any one of claims 1 to 10, further comprising (j) an antistatic agent having a structure in which a polyolefin block and a hydrophilic polymer block are alternately repeated and bonded to each other in an amount of 0.3 to 20 parts by weight based on 100 parts by weight of the total amount of the components (a) to (c), wherein the hydrophilic polymer block contains a polyoxyalkylene ether unit having a structure derived from a divalent alcohol, a divalent phenol and/or a tertiary amino group-containing diol, and an alkyleneoxide.

12. A thermoplastic elastomer molded product obtainable by injection-molding a thermoplastic elastomer as defined in any one of claims 1 to 11.

## Patentansprüche

1. Thermoplastisches Elastomer, umfassend:
(a) ein hydriertes Block-Copolymer mit einem gewichtsgemittelten Molekulargewicht von 80.000 bis 1.000.000, das erhältlich ist durch Hydrieren eines Block-Copolymers vom (A)-(B)-Typ und/oder eines Block-Copolymers vom (A)-(B)-(A)-Typ, worin (A) einen Block einer vinylaromatischen Verbindung darstellt und (B) einen Block eines konjugierten Dien-Polymers darstellt, so daß mindestens 90 % der Doppelbindungen des konjugierten Dien-Teils des Block-Copolymers gesättigt sind;
(b) ein auf Olefin basierendes kristallines Harz;
(C) einen auf Kohlenwasserstoff(en) basierenden Weichmacher für Kautschuke bzw. Gummis; und
(d) ein Acryl-modifiziertes Organopolysiloxan,
worin das Gewichtsverhältnis der Komponente (a) zur Komponente (b) ((a)/(b)) 15:85 bis 85:15 beträgt; die Komponente (c) in einer Menge von 10 bis 300 Gew.Teilen, bezogen auf 100 Gew.Teile der Komponente (a), enthalten ist; die Komponente (d) in einer Menge von 0,1 bis 10 Gew.Teilen, bezogen auf 100 Gew.Teile der Gesamtmenge der Komponenten (a) bis (c), enthalten ist; und zumindest die Komponenten (a) und (d) in der Gegenwart eines organischen Peroxids dynamisch wärmebehandelt sind.

2. Thermoplastisches Elastomer gemäß Anspruch 1, worin die Festigkeit bzw. Härte (S1) des Siliziumelements in einem Oberflächenteil des thermoplastischen Elastomers nach dem Eintauchen des thermoplastischen Elastomers in Tetrahydrofuran (THF) bei Raumtemperatur für 10 Minuten, gemessen mittels Röntgen-Fluoreszenzanalyse, um 2 kcps oder mehr größer ist als die Festigkeit bzw. Härte (S2) des Siliziumelements in einem Oberflächenteil des nichteingetauchten thermoplastischen Elastomers, gemessen mittels Röntgen-Fluoreszenzanalyse.

3. Thermoplastisches Elastomer gemäß Anspruch 2, worin die Festigkeit bzw. Härte (S1) um 5 kpcs oder mehr größer ist als die Festigkeit bzw. Härte (S2).

4. Thermoplastisches Elastomer gemäß irgendeinem der Ansprüche 1 bis 3, worin die Komponente (d) ein Acryl-modifiziertes Organosiloxan ist, das erhältlich ist durch Pfropfpolymerisieren, in einem Gewichtsverhältnis von 5:95 bis 95:5, eines (Meth)acrylsäureesters (d2) oder einer Mischung, die nicht weniger als 70 Gew.% des (Meth)acrylsäureesters (d2) und nicht mehr als 30 Gew.% von (einem) anderen Monomer(en) (d3), das/die mit der Komponente (d2) copolymerisierbar ist/sind, enthält, auf ein Organopolysiloxan (d1), das durch folgende allgemeine Formel dargestellt ist: 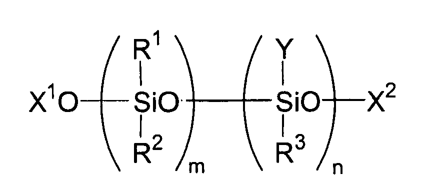 worin R¹, R² und R³ jeweils unabhängig eine substituierte oder unsubstituierte Kohlenwasserstoffgruppe mit 1 bis 20 Kohlenstoffatomen sind; Y eine Radikal-reaktive Gruppe oder eine organische Gruppe, die (eine) -SH-Gruppe(n) enthält, ist; X¹ und X² jeweils unabhängig ein Wasserstoffatom, eine Niederalkylgruppe oder -SiR⁴R⁵R⁶ sind, worin R⁴, R⁵ und R⁶ jeweils unabhängig eine substituierte oder unsubstituierte Kohlenwasserstoffgruppe mit 1 bis 20 Kohlenstoffatomen, eine Radikal-reaktive Gruppe oder eine organische Gruppe, die (eine) -SH-Gruppe(n) enthält, sind; m eine ganze Zahl von nicht größer als 10.000 ist; n eine ganze Zahl von nicht kleiner als 1 ist; und die Siloxankette des Organopolysiloxans verzweigt sein kann.

5. Thermoplastisches Elastomer gemäß irgendeinem der Ansprüche 1 bis 4, worin die Komponente (b) ein auf Polypropylen basierendes kristallines Harz ist.

6. Thermoplastisches Elastomer gemäß irgendeinem der Ansprüche 1 bis 5, ferner umfassend (e) ein unmodifiziertes Organopolysiloxan mit einer Viskosität von nicht kleiner als 10.000 mm²/s, gemessen bei 25°C gemäß JIS K2283, worin die Komponente (e) in einer Menge von 0,1 bis 10 Gew.Teilen, bezogen auf 100 Gew.Teile der Gesamtmenge der Komponenten (a) bis (c), enthalten ist.

7. Thermoplastisches Elastomer gemäß irgendeinem der Ansprüche 1 bis 6, ferner umfassend (f) ein Bambuspulver in einer Menge von 0,1 bis 10 Gew.Teilen, bezogen auf 100 Gew.Teile der Gesamtmenge der Komponenten (a) bis (c).

8. Thermoplastisches Elastomer gemäß irgendeinem der Ansprüche 1 bis 7, ferner umfassend (g) ein niedrigdichtes Polyethylenharz und/oder ein lineares niedrigdichtes Polyethylenharz in einer Menge von 1 bis 100 Gew.Teilen, bezogen auf 100 Gew.Teile der Gesamtmenge der Komponenten (a) bis (c).

9. Thermoplastisches Elastomer gemäß irgendeinem der Ansprüche 1 bis 8, ferner umfassend (h) ein hochdichtes Polyethylenharz in einer Menge von 0,3 bis 5 Gew.Teilen, bezogen auf 100 Gew.Teile der Gesamtmenge der Komponenten (a) bis (c).

10. Thermoplastisches Elastomer gemäß irgendeinem der Ansprüche 1 bis 9, ferner umfassend (i) eine modifizierte Olefinverbindung vom Multiphasenstrukturtyp in einer Menge von 0,3 bis 10 Gew.Teilen, bezogen auf 100 Gew.Teile der Gesamtmenge der Komponenten (a) bis (c), die ein auf Vinyl basierendes Polymersegment, hergestellt aus zumindest einem Vinylmonomer, das ausgewählt ist aus (Meth)acrylsäure, einem (Meth)acrylsäurealkylester und einem Vinylmonomer, das eine (Meth)acrylglycidylgruppe enthält, und ein auf Olefin basierendes Polymersegment umfaßt, worin das auf Vinyl basierende Polymersegment in dem auf Olefin basierenden Polymersegment in der Form von Feinpartikeln mit einer Partikelgröße von 0,01 bis 10 mm dispergiert ist.

11. Thermoplastisches Elastomer gemäß irgendeinem der Ansprüche 1 bis 10, ferner umfassend (j) ein Antistatikmittel in einer Menge von 0,3 bis 20 Gew.Teilen, bezogen auf 100 Gew.Teile der Gesamtmenge der Komponenten (a) bis (c), mit einer Struktur, worin sich ein Polyolefinblock und ein hydrophiler Polymerblock abwechselnd wiederholen und miteinander verbunden sind, worin der hydrophile Polymerblock eine Polyoxyalkylenethereinheit mit einer Struktur enthält, die sich aus einem zweiwertigen Alkohol, einem zweiwertigen Phenol und/oder einem (eine) tertiäre Aminogruppe(n)-haltigen Diol und einem Alkylenoxid ableitet.

12. Formling eines thermoplastischen Elastomers, erhältlich durch Spritzgießen/Formen eines thermoplastischen Elastomers, wie es in irgendeinem der Ansprüche 1 bis 11 definiert ist.

## Revendications

1. Élastomère thermoplastique comprenant :
(a) un copolymère séquencé hydrogéné, ayant un poids moléculaire moyen en poids de 80 000 à 1 000 000, qui peut être obtenu par hydrogénation d'un copolymère séquencé de type (A)-(B) et/ou d'un copolymère séquencé de type (A)-(B)-(A), dans lequel (A) représente une séquence dérivée d'un composé vinylique aromatique et (B) représente une séquence de type polymère de diène conjugué, de sorte qu'au moins 90 % des doubles liaisons de la partie dérivée de diène conjugué des copolymères séquencés soient saturées ;
(b) une résine cristalline dérivée d'oléfine ;
(c) un agent de ramollissement pour caoutchoucs à base hydrocarbure ; et
(d) un organopolysiloxane modifié par groupe acrylique,
dans lequel le rapport pondéral du composant (a) au composant (b) ((a)/(b)) est de 15 : 85 à 85 : 15 ; le composant (c) est contenu en une quantité de 10 à 300 parties en poids pour 100 parties en poids du composant (a) ; le composant (d) est contenu en une quantité de 0,1 à 10 parties en poids pour 100 parties en poids de la quantité totale des composant (a) à (c) ; et au moins les composants (a) et (d) sont traités dynamiquement à chaud en présence d'un peroxyde organique.

2. Élastomère thermoplastique selon la revendication 1, dans lequel l'intensité (S1) de l'élément silicium dans une partie de la surface de l'élastomère thermoplastique après immersion de l'élastomère thermoplastique dans du tétrahydrofuranne (THF) à une température ordinaire pendant 10 minutes, mesurée par analyse de fluorescence aux rayons X, est supérieure de 2 kcps (kilocoups par seconde) ou plus, à l'intensité (S2) de l'élément silicium dans une partie de la surface de l'élastomère thermoplastique non immergé, mesurée par analyse de fluorescence aux rayons X.

3. Élastomère tenant plastique selon la revendication 2, dans lequel l'intensité (S1) est supérieure à l'intensité (S2) de 5 kcps ou plus.

4. Élastomère thermoplastique selon l'une quelconque des revendications 1 à 3, dans lequel le composant (d) est un organosiloxane modifié par groupe acrylique, qui peut être obtenu par polymérisation par greffage d'un ester (méth)acrylique (d2) ou d'un mélange ne contenant pas moins de 70 % en poids de l'ester (méth)acrylique (d2) et pas plus de 30 % en poids d'un autre monomère (d3) qui peut être copolymérisé avec le composant (d2), avec un organopolysiloxane (d1) représenté par la formule générale suivante, selon un rapport pondéral de 5 : 95 à 95 : 5 : 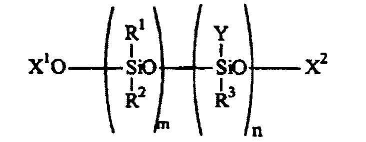 dans laquelle R¹, R² et R³ représentent indépendamment chacun un groupe hydrocarboné substitué ou non substitué, comportant de 1 à 20 atomes de carbone ; Y est un groupe réactif avec un radical ou un groupe organique contenant un groupe -SH ; X¹ et X² représentent indépendamment chacun un atome d'hydrogène, un groupe alkyle inférieur ou -SiR⁴R⁵R⁶ dans lequel R⁴, R⁵ et R⁶ représentent indépendamment chacun un groupe hydrocarboné substitué ou non substitué, comportant de 1 à 20 atomes de carbone, un groupe réactif avec un radical ou un groupe organique contenant un groupe -SH ; m est un entier de pas plus de 10 000 ; n est un entier de pas moins de 1 ; et la chaîne siloxane de l'organopolysiloxane peut être ramifiée.

5. Élastomère thermoplastique selon l'une quelconque des revendications 1 à 4, dans lequel le composant (b) est une résine cristalline à base de polypropylène.

6. Élastomère thermoplastique selon l'une quelconque des revendications 1 à 5, comprenant, en outre, (e) un organopolysiloxane ayant une viscosité de pas moins de 10 000 mm²/s, mesurée à 25 °C selon la norme JIS K2283, dans lequel le composant (e) est contenu en une quantité de 0,1 à 10 parties en poids pour 100 parties en poids de la quantité totale des composant (a) à (c).

7. Élastomère thermoplastique selon l'une quelconque des revendications 1 à 6, comprenant, en outre, (f) une poudre de bambou en une quantité de 0,1 à 10 parties en poids pour 100 parties en poids de la quantité totale des composants (a) à (c).

8. Élastomère thermoplastique selon l'une quelconque des revendications 1 à 7, comprenant, en outre, (g) une résine de polyéthylène à basse densité et/ou une résine de polyéthylène linéaire à basse densité en une quantité de 1 à 100 parties en poids pour 100 parties en poids de la quantité totale des composants (a) à (c).

9. Élastomère thermoplastique selon l'une quelconque des revendications 1 à 8, comprenant, en outre, (h) une résine de polyéthylène à haute densité, en une quantité de 0,3 à 5 parties en poids pour 100 parties en poids de la quantité totale des composants (a) à (c).

10. Élastomère thermoplastique selon l'une quelconque des revendications 1 à 9, comprenant, en outre, (i) un composé oléfinique modifié de type à structure polyphasique, comprenant un segment de type polymère vinylique produit à partir d'au moins un monomère vinylique, choisi parmi l'acide (méth)acrylique, un ester alkylique d'acide (méth)acrylique et un monomère vinylique contenant un groupe glycidyle (méth)acrylique, et un segment de type polymère dérivé d'oléfine en une quantité de 0,3 à 10 parties en poids pour 100 parties en poids de la quantité totale des composants (a) à (c), dans lequel le segment de type polymère vinylique est dispersé dans le segment de type polymère dérivé d'oléfine, sous la forme de fines particules ayant une taille particulaire de 0,01 à 10 mm.

11. Élastomère thermoplastique selon l'une quelconque des revendications 1 à 10, comprenant, en outre, (j) un agent antistatique ayant une structure dans laquelle une séquence de type polyoléfine et une séquence polymère hydrophile sont alternativement répétées et liées l'une à l'autre en une quantité de 0,3 à 20 parties en poids pour 100 parties en poids de la quantité totale des composants (a) à (c), dans lequel la séquence polymère hydrophile contient un motif polyéther d'oxyalkylène ayant une structure dérivée d'un alcool bivalent, d'un phénol bivalent et/ou d'un diol à groupe amino tertiaire, et d'un oxyde d'alkylène.

12. Produit d'élastomère thermoplastique moulé, qui peut être obtenu par moulage par injection d'un élastomère thermoplastique tel que défini dans l'une quelconque des revendications 1 à 11.
